# EUROPEAN PATENT SPECIFICATION

(11) **EP 3 179 167 B1**
(45) Date of publication and mention of the grant of the patent: **30.10.2019**
(21) Application number: 16191236.5
(22) Date of filing: 28.09.2016
(51) Int. Cl.: F23R 3/06

(54) **SINGLE SKIN COMBUSTOR HEAT TRANSFER AUGMENTERS**
EINWANDIGE BRENNKAMMERWAND MIT WÄRMETRANSFERERHÖHENDEN ELEMENTEN
ARGUMENTATEURS DE TRANSFERT DE CHALEUR DE CHAMBRE DE COMBUSTION EN SIMPLE PEAU

(30) Priority: 28.09.2015 US 201514867424
(43) Date of publication of application: 14.06.2017
(73) Proprietor: Pratt & Whitney Canada Corp., Longueuil, Québec J4G 1A1 (CA)
(72) Inventor: LAO, Si-Man Amy, (01BE5) Longueuil, Québec J4G 1A1 (CA); SREEKANTH, Sri, (01BE5) Longueuil, Québec J4G 1A1 (CA); PAPPLE, Michael, (01BE5) Longueuil, Québec J4G 1A1 (CA)
(74) Representative: Dehns

(56) References cited:
- EP-A1- 2 713 106
- EP-A1- 3 136 000
- EP-A2- 0 972 992
- WO-A2-2014/200588
- JP-A- 2000 320 837

## Description

### TECHNICAL FIELD

The invention relates generally to gas turbine engines and, more particularly, to single skin combustor liner cooling.

### BACKGROUND OF THE ART

Compared to double or multi-skinned combustors, a single skin design has the potential to be lighter in weight and hence lower in cost. However, current effusion cooled liner designs are limited in efficiency due to manufacturing constraints such as hole size and angle. Therefore, without increasing cooling air consumption, additional heat removal is a challenge. In aviation gas turbine engines, it is desirable that the amount of air supplied for cooling combustor walls be minimized in order not to negatively affect the overall performances of the engine. This poses challenges to meeting the durability requirements of single skin combustor walls, because the reduction in combustion wall cooling air may lead to unwanted material oxidation, thermal mechanical fatigue and/or thermal wall buckling due to thermal gradients. Particularly in small aero gas turbine engines, the total amount of air available for combustor wall cooling within the gas turbine thermodynamic cycle can be limited, especially where rich-burn combustion is sought. Therefore, it is a challenge to optimize the combustor wall cooling while still meeting the durability requirements of single skin combustors.

EP 2713106 A1 discloses a prior art system. EP 0 972 992 A2 discloses an aircraft gas turbine engine having the features of the preamble of claim 1.

### SUMMARY

In one aspect, there is provided a system for a gas turbine engine as set forth in claim 1.

### DESCRIPTION OF THE DRAWINGS

Reference is now made to the accompanying figures in which:
Fig. 1 is a schematic cross-section of a gas turbine engine;
Fig. 2 is an enlarged cross-section view of a portion of the combustor of the engine shown in Fig. 1 and illustrating a single skin liner with a combination of different heat transfer augmenters for guiding the incoming flow of cooling air and locally increasing heat exchange surfaces on the cold outer side of the liner;
Fig. 3 is an enlarged cold side view illustrating the heat transfer augmenters projecting from the outer surface of the single skin combustor liner; and
Fig. 4 is a schematic conceptual isometric view illustrating a flow field as modulated by a set of fins/ridges provided immediately downstream from a jet impact site on the cold outer surface of the single skin combustor liner; the impinging jet nozzle is fictitious and provided to illustrate the concept not an actual engine design .

### DETAILED DESCRIPTION

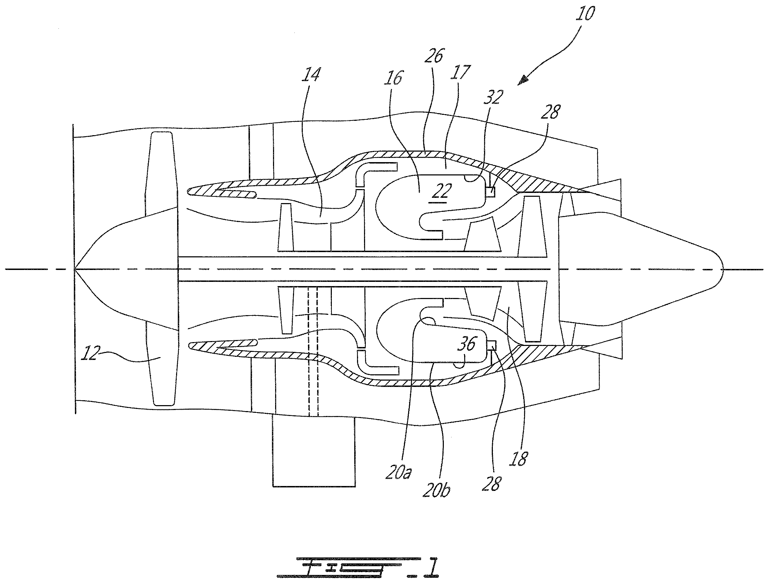

Fig. 1 illustrates a gas turbine engine 10 of a type provided for use in subsonic flight, generally comprising in serial flow communication a fan 12 through which ambient air is propelled, a compressor 14 for pressurizing the air, a combustor 16 in which the compressed air is mixed with fuel and ignited for generating an annular stream of hot combustion gases, and a turbine section 18 for extracting energy from the combustion gases.

The combustor 16 is a single skin combustor. That is the combustor 16 has a single skin liner. According to one embodiment, the single skin liner comprises a radially inner liner 20a and a radially outer liner 20b concentrically disposed relative to a central axis of the engine and defining therebetween an annular combustion chamber 22. The radially inner and radially outer liners 20a, 20b may each be made from a single sheet of metal with through holes defined therein for cooling purposes. In contrast, double or multi-sheet liners have gaps of cooling air made by sandwiching two or more sheets of metal or mounting heat shields on the inner surface of a liner to maintain some form of air gap through which cooling air may be guided to cool the innermost skin of the liner.

A plurality of circumferentially spaced-apart nozzles (only two being shown at 28) are provided at the dome end of the combustor 16 to inject a fuel/air mixture into the combustion chamber 22. Igniters (not shown) are provided along the upstream end portion of the combustion chamber 22 downstream of the tip of the nozzles 28 in order to initiate combustion of the fuel/air mixture delivered into the combustion chamber 22. The inner and outer liners 20a, 20b define a primary zone of the combustion chamber 22 at the upstream end thereof, where the fuel/air mixture provided by the fuel nozzles is ignited. The primary zone is generally understood as the region in which the fuel is burned and has the highest flame temperature within the combustor 16. The combustor 16 also has a secondary zone, which is the region characterized by first additional air jets to quench the hot product generated by the primary zone; and a dilution zone corresponding to the region where second additional jets quench the hot product and profile the hot product prior to discharge to the turbine section 18.

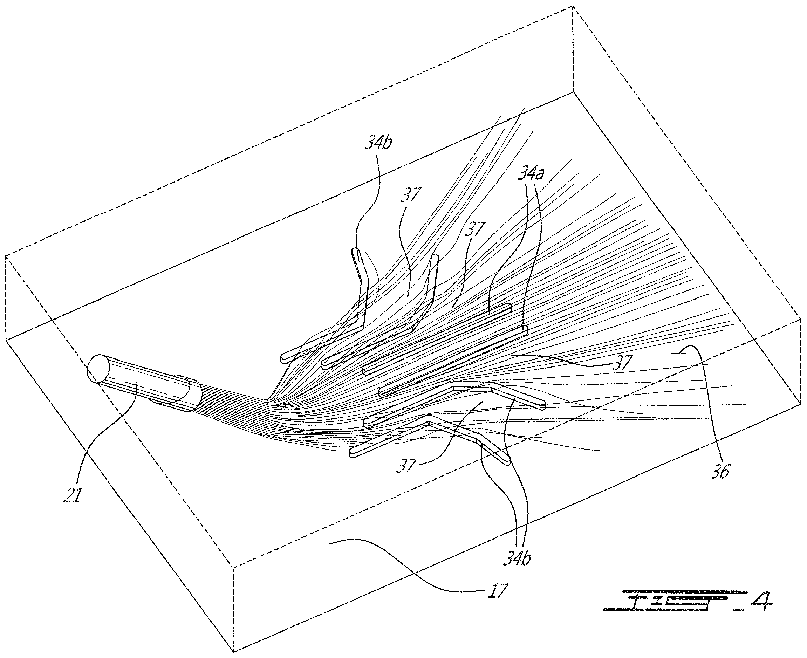

The combustor 16 is mounted in a plenum 17 circumscribed by an engine casing 26 (e.g. a gas generator case). The plenum 17 extends from the single skin liner of the combustor 16 to the engine casing 26. In other words, the single skin liner is an outermost surface of the combustor 16. The single skin liner is free of coverage in the plenum 17 (it is not surrounded/covered by any flow guiding sleeve to form an air gap like in a double skin design). The plenum 17 is supplied with compressor bleed air from the compressor 14. Compressor exit tubes such as the one shown at 21 in Fig. 4, can be used to direct high momentum air cooling jets onto the outer surface 36 of the combustor liner.

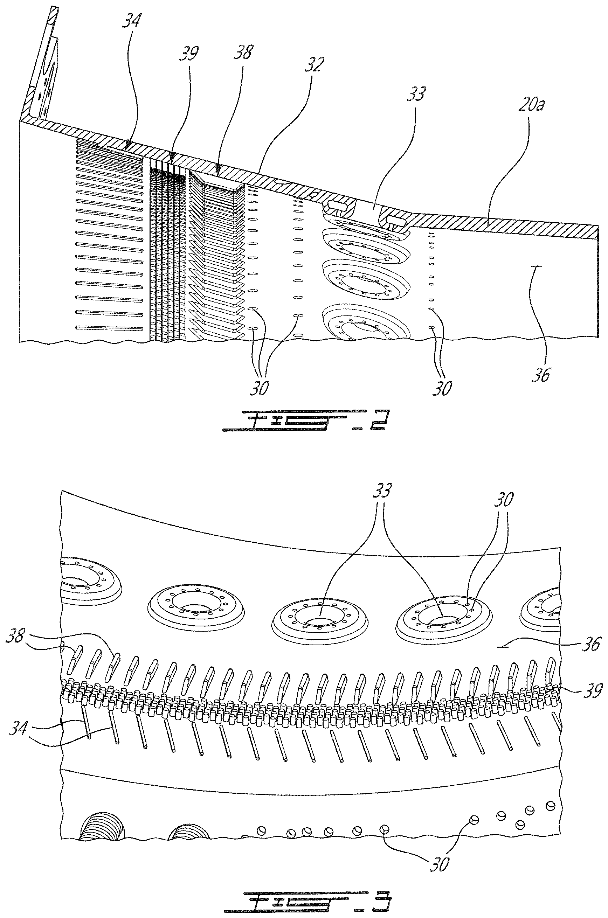

As illustrated in Fig. 2 in relation with the inner single skin liner 20a, a plurality of cooling holes 30 are defined in the inner and outer single skin liners 20a, 20b for allowing air in the plenum 17 to flow through the liners 20a, 20b, thereby picking up heat therefrom, and to then form a protective film of cooling air over the inner or combustion facing surface 32 of the liners 20a, 20b. The amount of cooling that is required is typically higher in the primary zone than in the secondary zone in the combustor. Dilution holes 33 also extend through the inner and outer liners 20a, 20b in the secondary zone of the combustor 16. The dilution holes 33 are not to be confused with the cooling holes 30. The dilution holes 33 are used to introduce dilution air into the combustion zone of the combustor 16. The dilution air quenches the flames so as to control the gas temperature to which the turbine hardware downstream of the combustor will be exposed. The quenching also reduces the level of NOx emissions in the engine exhaust. The dilution holes 33 are generally far smaller in number than the cooling holes 30, and each dilution hole 33 has a cross-sectional area that is substantially greater than the cross-sectional area of one of the cooling holes 30. The dilution holes 26 are typically arranged in a circumferentially extending row.

The compressor bleed flow discharged in the plenum 17 typically produces an uneven profile which causes some regions to exhibit flow stagnation or recirculation and others to experience flow separation. Specifically, for combustor cold side cooling, the heat removal occurs mainly at the surface by means of forced convection. Stagnation zones have a detrimental effect on this form of heat transfer. Such detrimental effects can be minimized and cooling efficiency thus improved by augmenting cold side surface flow characteristics and enhancing heat transfer. This can be accomplished by providing positive and/or negative material features on the outer or cold side surface 36 of the single skin liners 20a, 20b to channel and guide cooling flows into hotter regions for enhanced cooling. For instance, heat transfer augmenters, including various types of flow guiding structures and flow heat transfer enhancement features, may be strategically positioned on the cold outer surface or back side 36 of the inner and outer liners 20a, 20b to guide the coolant flow in open channels 37 (Fig. 4) to most thermally solicited regions of the inner and outer liners 20a, 20b and provide additional cooling thereat by increasing the surface area available for convection cooling. As will be seen hereinafter, the open channel concept of cold side heat transfer augmenters allow incident flow to approach the combustor as it normally does but once it nears the outer surface 36, diverts it towards much needed areas. Once it reaches the desired areas, heat transfer promoting features such as turbulators (e.g. pin fins) can be used to create a larger heat transfer benefit. Open-channel flow may be defined as a type of flow where the fluid is partially contained by a hard surface but also has a free surface exposed (example: a river). Closed-channel flow is where the fluid does not have any free surface and is fully contained by the solid walls (example: a pipe). In this case, the heat transfer augmenters are formed by a series of small ribs that channel surface flow similar to a moat or a river. Since the surfaces features (or channels) are so small compared to the casing around the combustor, it is similar to open-channel flow. If one were to take a cross-sectional tracing of the wall boundaries containing the flow, 90 degrees to the streamline, an open-channel would have an open profile (a line) whereas a closed-channel would have a closed profile (a circuit).

Referring more particularly to the embodiment shown in Figs. 2 and 3, it can be seen that the heat transfer augmenters may comprise an upstream row of circumferentially distributed ribs 34 oriented to guide the upcoming flow of cooling air to an intermediate band of circumferentially distributed pin fins 39 positioned upstream of a downstream circumferential row of ridges or fins 38, which is in turn disposed upstream of the dilution holes 33. It is understood that the illustrated combination of heat transfer augmenters constitute only one possible combination and arrangement of back side heat transfer augmenters that could be used to guide the coolant flow and enhance heat transfer on the cold outer side surface 36 of the single skin inner and outer liners 20a, 20b. In the illustrated embodiment, the ribs 34, the pin fins 39 and the fins 38 are all disposed in the primary zone of the combustor 16. However, it is understood that similar cold side heat transfer augmenters could be provided in the secondary zone of the combustor as well.

The ribs 34 are aligned with the flow of air on the outer surface 36 of the combustion liners 20a, 20b. The ribs may be curved so that as the flow of air changes direction, the ribs remain aligned. As best shown in Fig. 4, the adjacent ribs 34 form open flow guiding channels 37 on the outer surface of the liners to guide the flow to a desired location thereon. Depending on the flow direction of the incoming air and on the location of the hotter regions requiring additional cooling, the ribs 34 may be angled to the axial direction or curved. Also, adjacent ribs 34 may be non-uniformly spaced to vary the amount of cooling air being channeled to differently thermally solicited regions of the liner.

The pin fins 39 are typically provided on the hotter regions of the liners 20a, 20b where additional cooling is required. The pin fins 39 are disposed to receive the flow of air guided by the upstream set of ribs 34. Other turbulators, such as trip strips, could be used in place or in combination with the pin fins 39. The downstream fins 38 can performed a flow guiding function as well as heat exchange promoting function. As the ribs 34 they can be curved or angled to direct the flow of cooling air coming from the pin fins 39 in any desired direction over the outer surface 36 of the liners 20a, 20b.

The ribs 34, the pin fins 39 and the fins 38 may each be provided in the form of free-standing protrusions integrally projecting from the outer surface 36 of the radially inner and outer single skin liners 20a, 20b. Each of these features may be integrally formed on the outer surface 36 of the liner by means of additive manufacturing or other suitable manufacturing processes. According to one embodiment, the cold side ribs 34, the pin fins 39 and the fins 38 are obtained as an extension of a base metal of the single skin liner by laying down successive layers of the base metal onto the outer surface of a sheet metal substrate.

It is understood that the ribs 34, the pin fins 39 and the fins 38 could each have various configurations and geometries. For instance, as shown in Fig. 4, the ribs 34 could include a combination of straight and curved ribs 34a, 34b to provide for a better distribution of the cooling air over the outer surface 36 of the single skin liners 20a, 20b. Such ribs could be positioned to receive and guide the flow of cooling air discharged by compressor exit tubes 21 onto the outer surface 36 of the single skin liners 20a, 20b. The straight ribs 34a are centrally disposed relative to the jet impact site, whereas the curved ribs 38b curve away from the straight ribs 34a on opposed lateral sides thereof. As can be appreciated from Fig. 4, the flow of incoming jet is captured and the edges (lateral portions of the jet) are redirected sideways by the curved lateral ribs 34b. The flow speed is maintained for a longer distance from the jet impact site, which increases heat transfer.

The heat transfer augmenters (ribs 34, the pin fins 39 and the fins/ridges 38) could be distributed on a partial surface of the single skin liner or over a full surface thereof. The heat transfer augmenters are distributed so as to provide for a uniform temperature distribution all around the combustor liners 20a, 20b. For instance, the density of pin fins 39 (or other suitable turbulators) could be greater in hot spot regions and less in cooler regions of the combustor 16. Also, a greater concentration of heat transfer augmenters can be provided in certain regions of the combustor 16 where it is desirable to limit the quantity of cooling air flowing into the combustor because the cooling air may have a detrimental effect on the overall combustion process. For instance, in some applications, it might be desirable to cut down on the amount of cooling air directed into the primary zone of the combustor 16 in order to maintain a rich fuel/air mixture ratio. This may be achieved by reducing the density of cooling holes 30 in the primary zone and correspondingly increasing the density of heat transfer augmenters in this same primary zone so as to compensate for the reduced number of cooling holes.

The heat transfer augmenters can be of uniform or non-uniform height. Also, it is understood that a combination of different shapes and kind of heat transfer augmenters could be provided on the cold outer surface 36 of a same single skin liner 20a, 20b. In fact, various combinations of sizes, distributions and dimensions are possible.

In use, the compressor bleed air is discharged into the plenum 17 with significant momentum. A significant portion of this momentum is converted to static pressure upon encountering the combustor liner, prior to entering the combustion chamber 22. The heat transfer augmenters (the ribs 34, the pin fins 39 and the fins 38) are passive features that utilize some of the air momentum before it gets converted. The air is captured in the open channels 37 formed between the ribs 34 and is guided and redistributed over the outer surface 36 of the liners 20a, 20b to promote a more uniform temperature thereover. It allows to augmenting the local flow such that the heat transfer coefficient is higher where it is needed. The air flowing through the guiding channels 37 between the ribs 34 is directed at least in part to the pin fins 39, which are provided in the hot spot regions to enable higher heat transfer efficiency in the most thermally solicited regions of the combustor liner. In this way, the risk of having over-cooled and under-cooled regions may be reduced. It provides for a more uniform temperature distribution around the combustor liner. The cooling air leaving the pin fins 39 is then received and guided by the fins 38. As the air flows in the open channels defined between adjacent fins 38, it picks up heat from the fins . As mentioned hereinbefore, the fins may be curved and/or appropriately oriented relative to the flow of cooling air to guide the air to a desired location before it reaches the row of dilution holes 33.

From the foregoing, it can be appreciated that the cold side heat augmenters allow the designer to reduce hot spots, improving both the thermal mechanical and oxidation life of the part. This is all done without the need to increase cooling air consumption; thereby minimizing the impact on combustor and overall engine efficiency.

The air guided on the outer surface 36 of the liners 20a, 20b has a second opportunity to cool the liners 20a, 20b by flowing through the cooling holes 30. Indeed, as the air flows through the cooling holes 30, it cools the liners 20a, 20b by in-hole heat transfer. At its exits from the cooling holes 30, the air flows over the inner or hot combustion facing surface 32 of the liners 20a, 20b, thereby providing for the formation of a protective cooling film thereover. Accordingly, with the addition of the heat transfer augmenters on the cold side of the liner, the air has several opportunities to cool down the liner. Multiple usage of the same cooling air provides for improved cooling efficiency. In this way, single skin combustors may be used in high temperature applications where double skin combustor designs would have typically been retained. Also, since the heat transfer augmenters are located on the cold side of the combustor liner, they are not exposed to the hot combustion gasses and are, thus, less subject to erosion over time. This provides for a more robust design.

While cold side heat transfer augmenters have been mainly described in connection with positive material features (e.g. ridge, ribs, fins and pin fins), it is understood that they could also take the form of negative material features. For instance, dimples could be formed in the outer surface 36 of the liner to act as turbulators. The open channels between the ribs could take the form of closed bottom grooves or slots machined or otherwise suitably formed in the outer surface 36 of the liners 20a, 20b. Surface knurling could also be used to form heat transfer augmenter patterns of various configuration (e.g. star pattern, fan pattern) in the outer surface 36 of the liners 20a, 20b.

The above description is meant to be exemplary only, and one skilled in the art will recognize that changes may be made to the embodiments described without departing from the scope of the invention disclosed. For instance, the same principle could be applied to a combustor can. Any modifications which fall within the scope of the present invention will be apparent to those skilled in the art, in light of a review of this disclosure, and such modifications are intended to fall within the appended claims.

## Claims

1. A system for a gas turbine engine (10) for use in subsonic flight comprising:
a gas generator case (26);
a plenum (17) circumscribed by the gas generator case (26); and
a single skin combustor (16) comprising a single skin liner (20a, 20b) defining a combustion chamber (22), the single skin liner (20a, 20b) having an inner surface exposed to the combustion chamber (22) and an outer surface (36) exposed to an open-channel flow of air in the plenum (17), the outer surface (36) of the single skin liner (20a, 20b) being an outermost surface of the combustor (16), cooling holes (30) extending through the single skin liner (20a, 20b), and **characterised in that** open flow guiding channels (37) are provided on the outer surface (36) of the single skin liner (20a, 20b), the open flow guiding channels (37) being uncovered and aligned with the flow of air over the outer surface (36) of the single skin liner (20a, 20b).

2. The system defined in claim 1, wherein at least some of the open flow guiding channels (37) define a curve to in use redirect a portion of the flow of air to a predetermined hot spot region.

3. The system defined in claim 2, wherein heat transfer augmenters (34, 38, 39) are provided in the hot spot region, the heat transfer augmenters (34, 38, 39) projecting from the outer surface (36) of the single skin liner (20a, 20b).

4. The system defined in claim 3, wherein the heat transfer augmenters (34, 38, 39) are selected from the group consisting of: pin fins, fins, trip strips, dimples and knurled surfaces.

5. The system defined in claim 3 or 4, wherein the heat transfer augmenters (34, 38, 39) are an extension of a base metal of the single skin liner (20a, 20b).

6. The system defined in claim 5, wherein each heat transfer augmenter (34, 38, 39) comprises successive layers of sequentially deposit material on a sheet metal base.

7. The system defined in any of claims 3 to 6, wherein the density of heat transfer augmenters (34, 38, 39) varies over the outer surface (36) of the single skin liner (20a, 20b).

8. The system defined in any preceding claim, wherein the open flow guiding channels (37) are defined between pairs of adjacent ribs (34) projecting from the outer surface (36) of the single skin liner (20a, 20b).

9. The system defined in claim 8, wherein at least some of the ribs (34) are curved.

10. The system defined in claim 8 or 9, wherein the ribs (34) are non-uniformly distributed on the outer surface (36) of the single skin liner (20a, 20b) to in use direct more air towards predetermined hot spot regions of the single skin liner (20a, 20b).

11. The system defined in claim 8, 9 or 10, wherein pin fins (39) project from the outer surface (36) of the single skin liner (20a, 20b) downstream from the ribs (34) relative to the flow of air over the outer surface (36).

12. The system defined in claim 11, wherein a circumferential row of dilution holes (33) is provided downstream of the circumferential row of fins (38).

13. The system defined in claim 12, wherein a circumferential row of fins (38) extends from the outer surface (36) of the single skin liner (20a, 20b) downstream from the pin fins (39).

## Patentansprüche

1. System für ein Gasturbinentriebwerk (10) zur Verwendung in einem Unterschallflug, umfassend:
ein Gasgeneratorgehäuse (26);
ein Plenum (17), das von dem Gasgeneratorgehäuse (26) umgeben ist; und
einen Verbrenner (16) mit Einzelhaut, die eine Einzelhautauskleidung (20a, 20b) umfasst, die eine Brennkammer (22) definiert, wobei die Einzelhautauskleidung (20a, 20b) eine Innenfläche, die der Brennkammer (22) ausgesetzt ist, und eine Außenfläche (36) aufweist, die einem Offenkanalluftstrom im Plenum (17) ausgesetzt ist, wobei die Außenfläche (36) der Einzelhautauskleidung (20a, 20b) eine äußerste Fläche des Brenners (16) ist, Kühlungslöcher (30) durch die Einzelhautauskleidung (20a, 20b) verlaufen und **dadurch gekennzeichnet, dass** offene Stromführungskanäle (37) an der Außenfläche (36) der Einzelhautauskleidung (20a, 20b) vorgesehen sind, wobei die offenen Stromführungskanäle (37) nicht abgedeckt und an dem Luftstrom über die Außenfläche (36) der Einzelhautauskleidung (20a, 20b) ausgerichtet sind.

2. System nach Anspruch 1, wobei wenigstens einige der offenen Stromführungskanäle (37) eine Krümmung definieren, um im Gebrauch einen Teil des Luftstroms zu einem vorgegebenen Hitzestaubereich umzuleiten.

3. System nach Anspruch 2, wobei Wärmeübertragungsförderer (34, 38, 39) im Hitzestaubereich vorgesehen sind, wobei die Wärmeübertragungsförderer (34, 38, 39) von der Außenfläche (36) der Einzelhautauskleidung (20a, 20b) vorspringen.

4. System nach Anspruch 3, wobei die Wärmeübertragungsförderer (34, 38, 39) ausgewählt sind aus der Gruppe bestehend aus: Stiftlamellen, Lamellen, Auslösestreifen, Grübchen und gerändelten Flächen.

5. System nach Anspruch 3 oder 4, wobei die Wärmeübertragungsförderer (34, 38, 39) eine Verlängerung eines Basismetalls der Einzelhautauskleidung (20a, 20b) sind.

6. System nach Anspruch 5, wobei jeder Wärmeübertragungsförderer (34, 38, 39) aufeinanderfolgende Schichten von sequenziell angeordnetem Abscheidungsmaterial auf einer Blechbasis umfasst.

7. System nach einem der Ansprüche 3 bis 6, wobei die Dichte der Wärmeübertragungsförderer (34, 38, 39) im Verlauf der Außenfläche (36) der Einzelhautauskleidung (20a, 20b) variiert.

8. System nach einem der vorstehenden Ansprüche, wobei die offenen Stromführungskanäle (37) zwischen Paaren benachbarter Rippen (34) definiert sind, die von der Außenfläche (36) der Einzelhautauskleidung (20a, 20b) vorspringen.

9. System nach Anspruch 8, wobei wenigstens einige der Rippen (34) gekrümmt sind.

10. System nach Anspruch 8 oder 9, wobei die Rippen (34) ungleichmäßig an der Außenfläche (36) der Einzelhautauskleidung (20a, 20b) verteilt sind, um im Gebrauch mehr Luft zu vorgegebenen Hitzestaubereichen der Einzelhautauskleidung (20a, 20b) zu lenken.

11. System nach Anspruch 8, 9 oder 10, wobei die Stiftlamellen (39) von der Außenfläche (36) der Einzelhautauskleidung (20a, 20b) im Verhältnis zum Luftstrom über die Außenfläche (36) stromabwärts der Rippen (34) vorspringen.

12. System nach Anspruch 11, wobei eine Umfangsreihe von Verdünnungslöchern (33) stromabwärts der Umfangsreihe von Lamellen (38) vorgesehen ist.

13. System nach Anspruch 12, wobei die Umfangsreihe von Lamellen (38) sich von der Außenfläche (36) der Einzelhautauskleidung (20a, 20b) stromabwärts der Stiftlamellen (39) erstreckt.

## Revendications

1. Système pour un moteur à turbine à gaz (10) destiné à être utilisé en vol subsonique, comprenant :
un carter de générateur de gaz (26) ;
un plénum (17) délimité par le carter de générateur de gaz (26) ; et
une chambre de combustion en simple peau (16) comprenant un revêtement en simple peau (20a, 20b) définissant une chambre de combustion (22), le revêtement en simple peau (20a, 20b) ayant une surface intérieure exposée à la chambre de combustion (22) et une surface extérieure (36) exposée à un flux d'air à canal ouvert dans le plénum (17), la surface extérieure (36) du revêtement en simple peau (20a, 20b) étant une surface la plus à l'extérieur de la chambre de combustion (16), des trous de refroidissement (30) s'étendant à travers le revêtement en simple peau (20a, 20b) et **caractérisé en ce que** des canaux de guidage d'écoulement ouverts (37) sont prévus sur la surface extérieure (36) du revêtement en simple peau (20a, 20b), les canaux de guidage d'écoulement ouverts (37) étant découverts et alignés avec le flux d'air sur la surface extérieure (36) du revêtement en simple peau (20a, 20b).

2. Système selon la revendication 1, dans lequel au moins certains des canaux de guidage d'écoulement ouverts (37) définissent une courbe pour rediriger en cours d'utilisation une partie du flux d'air vers une région de point chaud prédéterminée.

3. Système selon la revendication 2, dans lequel des augmentateurs de transfert de chaleur (34, 38, 39) sont prévus dans la région de point chaud, les augmentateurs de transfert de chaleur (34, 38, 39) faisant saillie à partir de la surface extérieure (36) du revêtement en simple peau (20a, 20b).

4. Système selon la revendication 3, dans lequel les augmentateurs de transfert de chaleur (34, 38, 39) sont choisis dans le groupe comprenant : des ailettes à broches, des ailettes, des bandes de déclenchement, des creux et des surfaces moletées.

5. Système selon la revendication 3 ou 4, dans lequel les augmentateurs de transfert de chaleur (34, 38, 39) sont une extension d'un métal de base du revêtement en simple peau (20a, 20b) .

6. Système selon la revendication 5, dans lequel chaque augmentateur de transfert de chaleur (34, 38, 39) comprend des couches successives de matériau déposé de manière séquentielle sur une base en tôle.

7. Système selon l'une quelconque des revendications 3 à 6, dans lequel la densité des augmentateurs de transfert de chaleur (34, 38, 39) varie sur la surface extérieure (36) du revêtement en simple peau (20a, 20b).

8. Système selon une quelconque revendication précédente, dans lequel les canaux de guidage d'écoulement ouverts (37) sont définis entre des paires de nervures adjacentes (34) faisant saillie à partir de la surface extérieure (36) du revêtement en simple peau (20a, 20b).

9. Système selon la revendication 8, dans lequel au moins certaines des nervures (34) sont incurvées.

10. Système selon la revendication 8 ou 9, dans lequel les nervures (34) ne sont pas uniformément réparties sur la surface extérieure (36) du revêtement en simple peau (20a, 20b) afin de diriger en cours d'utilisation davantage d'air vers des régions de points chauds prédéterminées du revêtement en simple peau (20a, 20b).

11. Système selon la revendication 8, 9 ou 10, dans lequel des ailettes à broches (39) font saillie à partir de la surface extérieure (36) du revêtement en simple peau (20a, 20b) en aval des nervures (34) par rapport au flux d'air sur la surface extérieure (36).

12. Système selon la revendication 11, dans lequel une rangée circonférentielle de trous de dilution (33) est prévue en aval de la rangée circonférentielle d'ailettes (38).

13. Système selon la revendication 12, dans lequel une rangée circonférentielle d'ailettes (38) s'étend à partir de la surface extérieure (36) du revêtement en simple peau (20a, 20b) en aval des ailettes à broches (39).
